# EUROPEAN PATENT APPLICATION

(11) **EP 4 364 874 A1**
(43) Date of publication of application: **08.05.2024**
(21) Application number: 22848963.9
(22) Date of filing: 19.04.2022
(51) Int. Cl.: B22F 10/38, B22F 10/22, B22F 12/41, B22F 12/44, B23K 9/04, B23K 26/342, B29C 64/209, B29C 64/393, B33Y 10/00, B33Y 30/00, B33Y 50/02

(54) **ADDITIVE MANUFACTURED ARTICLE MANUFACTURING METHOD AND ADDITIVE MANUFACTURING SYSTEM**

(30) Priority: 30.07.2021 JP 2021125245
(71) Applicant: Mitsubishi Heavy Industries, Ltd., Tokyo 100-8332 (JP)
(72) Inventor: TSUBOTA, Shuho, Tokyo 100-8332 (JP); KIMURA, Masahiro, Tokyo 100-8332 (JP); TAMARU, Tomoharu, Tokyo 100-8332 (JP); SANO, Yusuke, Tokyo 100-8332 (JP); BANNO, Yasutaka, Tokyo 100-8332 (JP)
(74) Representative: Cabinet Beau de Loménie
(86) International application number: PCT/JP2022/018179
(87) International publication number: WO 2023/007880

(57) **Abstract**

An additive manufactured object production method includes: a core portion forming step of additively forming a core portion as an inner portion of an additive manufactured object by stacking first weld beads each size of which is corresponding to a first resolution; and a shell portion forming step of additively forming a shell portion as an outer portion of the additive manufactured object on a surface of the core portion by stacking second weld beads each size of which is corresponding to a second resolution higher than the first resolution after the core portion forming step.

## Description

### Technical Field

The present disclosure relates to an additive manufactured object production method and an additive manufactured object production system.

Priority is claimed on Japanese Patent Application No. 2021-125245, filed on July 30, 2021, the content of which is incorporated herein by reference.

### Background Art

Patent Document 1 discloses a method of producing an additive manufactured object by stacking weld beads obtained by melting and solidifying molten filler material.

### Citation List

### Patent Document

Patent Document 1: Japanese Unexamined Patent Application, First Publication No. 2021-24260

### Summary of Invention

### Technical Problem

However, in the additive manufactured object production method described in Patent Document 1, when the weld beads are set to have a large width, that is, the weld beads are set to have a low resolution, the accuracy of the surface of the additive manufactured object may be low and finishing processing may take time.

Further, when the weld beads are set to have a small width from the beginning, that is, the weld beads are set to have a high resolution, it may take time to produce the entire additive manufactured object.

The present disclosure has been made to solve the above-described problems and an object thereof is to provide an additive manufactured object production method and an additive manufactured object production system capable of efficiently producing an additive manufactured object.

### Solution to Problem

In order to solve the above-described problems, an additive manufactured object production method according to the present disclosure includes: a core portion forming step of additively forming a core portion as an inner portion of an additive manufactured object by stacking first weld beads each size of which is corresponding to a first resolution; and a shell portion forming step of additively forming a shell portion as an outer portion of the additive manufactured object on a surface of the core portion by stacking second weld beads each size of which is corresponding to a second resolution higher than the first resolution after the core portion forming step.

An additive manufactured object production system according to the present disclosure includes: a welding head; and an additive forming control device which is configured to control the welding head so that an additive manufactured object is formed by operating the welding head, wherein the additive forming control device includes: a core portion forming control unit which is configured to control the welding head so that a core portion as an inner portion of the additive manufactured object is additively formed by stacking first weld beads each size of which is corresponding to a first resolution; and a shell portion forming control unit which is configured to control the welding head so that a shell portion as an outer portion of the additive manufactured object is additively formed on a surface of the core portion by stacking second weld beads each size of which is corresponding to a second resolution higher than the first resolution after at least part of the core portion is additively formed.

### Advantageous Effects of Invention

According to the additive manufactured object production method and the additive manufactured object production system of the present disclosure, it is possible to efficiently manufacture the additive manufactured object.

### Brief Description of Drawings

FIG. 1 is a diagram showing a configuration of an additive manufactured object production system according to a first embodiment of the present disclosure.
FIG. 2 is a diagram showing a main part of a laser welding head as an example of a welding head according to the first embodiment of the present disclosure.
FIG. 3 is a diagram showing a main part of an arc welding head as an example of the welding head according to the first embodiment of the present disclosure.
FIG. 4 is a functional block diagram showing a configuration of an additive forming control device according to the first embodiment of the present disclosure.
FIG. 5 is a flowchart showing a procedure of an additive manufactured object production method according to the first embodiment of the present disclosure.
FIG. 6 is a diagram schematically showing a core portion forming step according to the first embodiment of the present disclosure.
FIG. 7 is a diagram schematically showing a shell portion forming step according to the first embodiment of the present disclosure.
FIG. 8 is a diagram schematically showing a modified example of the additive manufactured object production method according to the first embodiment of the present disclosure.
FIG. 9 is a diagram showing a configuration of an additive manufactured object production system according to a second embodiment of the present disclosure.
FIG. 10 is a functional block diagram showing a configuration of an additive forming control device according to the second embodiment of the present disclosure.
FIG. 11 is a flowchart showing a procedure of an additive manufactured object production method according to the second embodiment of the present disclosure.
FIG. 12 is a diagram schematically showing a core portion forming step according to the second embodiment of the present disclosure.
FIG. 13 is a diagram schematically showing a shell portion forming step according to the second embodiment of the present disclosure.
FIG. 14 is a hardware configuration diagram showing a configuration of a computer according to each embodiment of the present disclosure.

### Description of Embodiments

### <First embodiment>

### (Additive manufactured object production system)

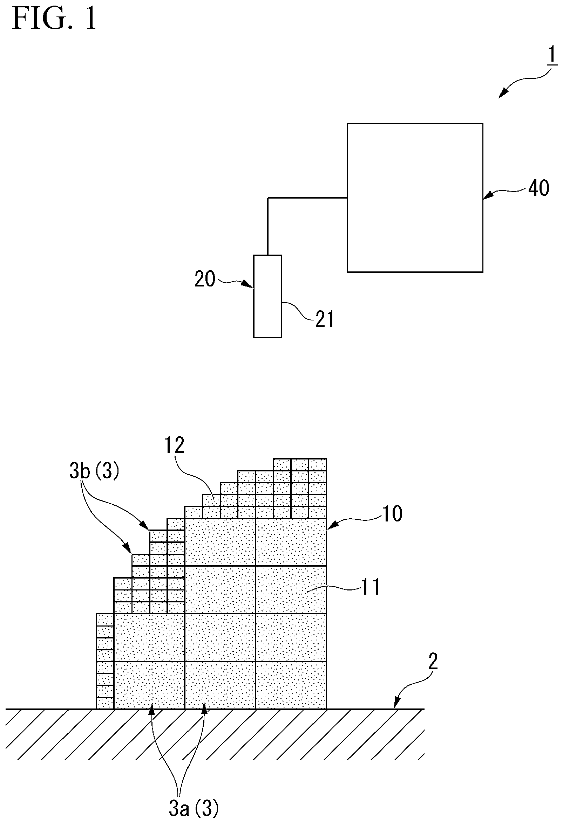

Hereinafter, an additive manufactured object production system 1 and a method of producing an additive manufactured object 10 according to a first embodiment of the present disclosure will be described with reference to FIGS. 1 to 7.

The additive manufactured object production system 1 of this embodiment is used to produce the additive manufactured object 10 by performing overlaying on a surface of a stage 2 using a metallic molten filler material. For example, the additive manufactured object production system 1 of this embodiment can be applied to various three-dimensional additive manufacturing technologies such as a 3D printer.

As shown in FIG. 1, the additive manufactured object production system 1 includes a stage 2, a welding head 20, and an additive forming control device 40. FIG. 1 schematically shows a cross-section of the additive manufactured object 10.

### (Stage)

The stage 2 is a plate-shaped member formed of a metal material. The surface of the stage 2 on which the additive manufactured object 10 is produced is a flat surface. Hereinafter, a direction orthogonal to the surface of the stage 2 may be simply referred to as the "normal direction", and a direction parallel to the surface of the stage 2 may simply be referred to as the "plane direction".

### (Welding head)

The welding head 20 is disposed to face the surface of the stage 2. The welding head 20 melts a molten filler material and forms a droplet-shaped weld bead 3 on the surface of the stage 2. The molten filler material is a metal material. Examples of the molten filler material include stainless steel, titanium alloy, nickel alloy, aluminum alloy, chromium alloy, and the like. The molten filler material may be the same metal as the stage 2 or a different metal from the stage 2. A plurality of the weld beads 3 are formed continuously in the plane direction of the surface of the stage 2. By stacking the plurality of weld beads 3 in the normal direction of the surface of the stage 2, the desired additive manufactured object 10 is produced. The weld bead 3 is the minimum unit constituting the additive manufactured object 10. Therefore, the dimension of the weld bead 3 becomes a factor that determines the shape accuracy of the additive manufactured object 10.

Hereinafter, the maximum dimension of the weld bead 3 in the plane direction of the surface of the stage 2 may be simply referred to as a "bead width".

In the process of forming the additive manufactured object 10, since the weld bead 3 appears to be stippled, the size of the bead width may be expressed as the resolution of the weld bead 3. Hereinafter, it is assumed that the resolution of the weld bead 3 decreases as the bead width increases and the resolution of the weld bead 3 increases as the bead width decreases.

The welding head 20 forms two types of welding beads 3, that is, a first weld bead 3a whose size is corresponding to a first resolution and a second weld bead 3b whose size is corresponding to a second resolution higher than the first resolution. The first weld bead 3a and the second weld bead 3b are formed of the same molten filler material.

Furthermore, the welding head 20 may be a laser welding head 20a or an arc welding head 20b. The welding process in this embodiment can be changed as appropriate.

### (Laser welding head)

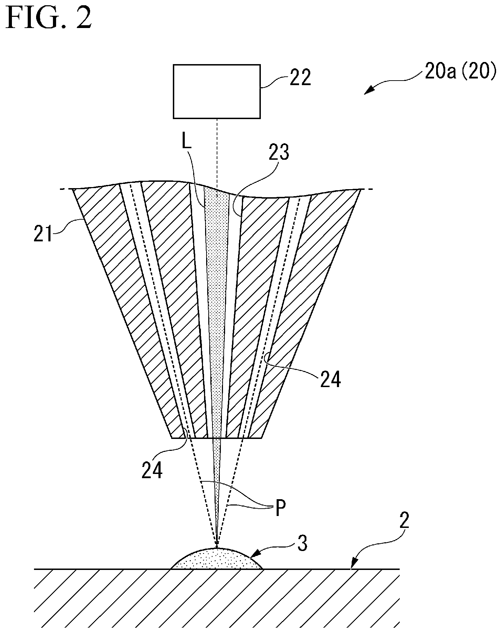

As shown in FIG. 2, when the welding head 20 is the laser welding head 20a, a heat source is a laser beam L. Further, for example, powder P is used as the molten filler material. The laser welding head 20a includes a head body 21, a laser source 22, and a powder supply unit (not shown).

The head body 21 is provided at a position away from the surface of the stage 2 in the normal direction. The head body 21 is formed in a truncated cone shape that tapers toward the surface of the stage 2. The center axis of the head body 21 extends in the normal direction of the surface of the stage 2. The center axis of the head body 21 may be slightly inclined with respect to the normal line of the surface of the stage 2. The head body 21 is provided with a laser passage 23 and a powder supply path 24.

The laser passage 23 penetrates the head body 21 along the center axis of the head body 21. The laser passage 23 is formed in a tapered shape that tapers toward the surface of the stage 2 in the side view.

The powder supply path 24 penetrates the head body 21 in the axial direction. The powder supply path 24 is formed along the outer peripheral surface of the head body 21. The powder supply path 24 is formed symmetrically with the laser passage 23 interposed therebetween in the side view. As the powder supply path 24 approaches the stage 2, the powder supply path gradually approaches the center axis of the head body 21 linearly.

The laser source 22 is disposed at a position away from the stage 2. The laser source 22 emits a laser beam L toward the surface of the stage 2. The laser beam L travels straight in the axial direction inside the laser passage 23 of the head body 21 and is irradiated onto the surface of the stage 2. A spot of the laser beam L is generated on the surface of the stage 2.

The powder supply unit (not shown) supplies the powder P to the head body 21. The powder P is supplied into the powder supply path 24 of the head body 21. In the powder supply path 24, a carrier gas flows toward the surface of the stage 2. Therefore, the powder P is injected to the spot of the laser beam L on the stage 2 by the flow of the carrier gas inside the powder supply path 24. The injected powder P is melted by the laser beam L to become the weld bead 3.

When the welding head 20 is the laser welding head 20a, it is possible to adjust the shape and the bead width of the weld bead 3 by adjusting the spot shape of the laser beam L or the energy of the laser beam L. The spot shape of the laser beam L changes depending on optical elements (not shown) through which the laser beam L passes before the laser beam is irradiated onto the surface of the stage 2. The optical elements are, for example, a diffuser plate and a focusing lens. The spot shape of the laser beam L can be controlled by precisely controlling the curvature of the optical elements.

### (Arc welding head)

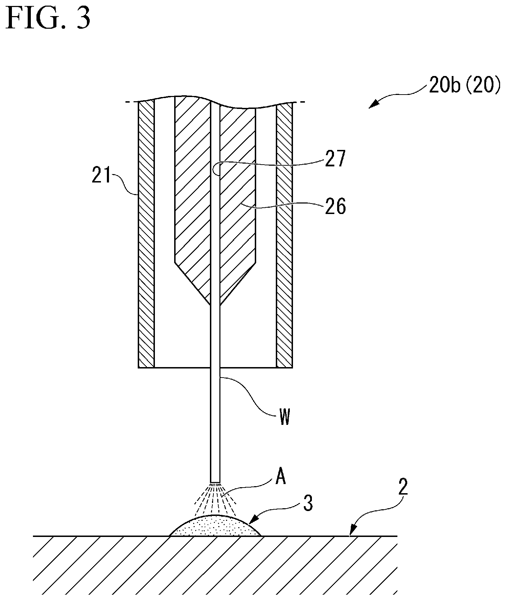

As shown in FIG. 3, when the welding head 20 is the arc welding head 20b, the heat source is arc A. For example, a wire W is used as the molten filler material. The arc welding head 20b includes the head body 21, an electrode 26, and the wire W.

The head body 21 is provided at a position away from the surface of the stage 2 in the normal direction. The head body 21 is formed in a cylindrical shape. The center axis of the head body 21 follows the normal direction of the surface of the stage 2.

The electrode 26 is formed in a bar shape which extends toward one side. The electrode 26 is inserted through the head body 21. The end of the electrode 26 on the side of the surface of the stage 2 is covered by the head body 21 from the outside in the radial direction. A positive voltage is applied to the electrode 26. When a voltage difference between the electrode 26 and the stage 2 exceeds a predetermined value, the air between the electrode 26 and the stage 2 undergoes dielectric breakdown and discharges. Accordingly, the arc A is generated between the electrode 26 and the stage 2.

Further, a wire insertion passage 27 is formed in the electrode 26 to penetrate in the axial direction. The wire W is inserted through the wire insertion passage 27. The tip of the wire W is covered by the head body 21 from the outside in the radial direction while protruding from the electrode 26. A positive voltage is applied to the wire W via the electrode 26. When a voltage difference between the wire W and the stage 2 exceeds a predetermined value, the air between the wire W and the stage 2 undergoes dielectric breakdown and discharges. Accordingly, the arc A is generated in the space between the wire W and the stage 2. The tip of the wire W is melted by the arc A to become the weld bead 3. The wire W is sequentially sent toward the arc A by the amount necessary to form the weld bead 3.

When the welding head 20 is the arc welding head 20b, it is possible to adjust the shape and the bead width of the weld bead 3 by adjusting the voltage applied to the electrode 26 and adjusting the energy of the arc A.

Furthermore, in the above-described embodiments, the welding head 20 is the laser welding head 20a or the arc welding head 20b, but the present disclosure is not limited thereto. For example, the welding head 20 may be an electron beam forming head. The electron beam forming head uses the metal wire W as the molten filler material similar to the arc welding head 20b. The electron beam forming head melts the wire W by an electron beam to form the weld bead 3.

In this way, a method in which the metallic molten filler material is supplied from the welding head 20 and is melted by a heat source such as a laser beam L, an arc A, and an electron beam to be stacked at a desired location is called a "deposition method".

### (Additive forming control device)

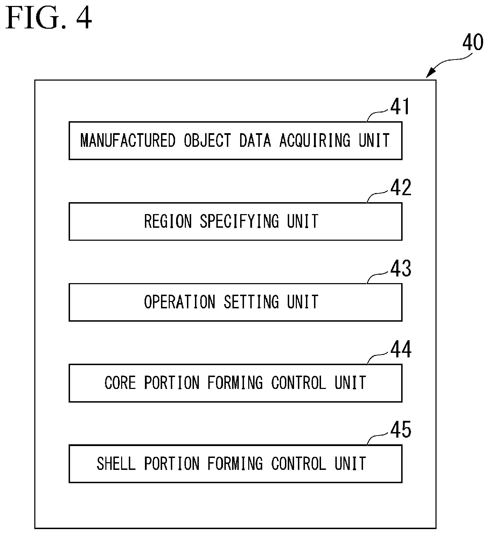

Subsequently, the configuration of the additive forming control device 40 of this embodiment will be described with reference to FIG. 4.

The additive forming control device 40 controls the welding head 20 so that the welding head 20 produces the additive manufactured object 10. The additive forming control device 40 is connected to the welding head 20 by or without wire.

The additive forming control device 40 includes processing units such as a manufactured object data acquiring unit 41, a region specifying unit 42, an operation setting unit 43, a core portion forming control unit 44, and a shell portion forming control unit 45.

### (Manufactured object data acquiring unit)

The manufactured object data acquiring unit 41 acquires the manufactured object data of the additive manufactured object 10. The manufactured object data includes data of the final shape of the additive manufactured object 10.

### (Region specifying unit)

The region specifying unit 42 specifies a core region for forming a core portion 11 and a shell region for forming a shell portion 12 on the basis of the final shape of the additive manufactured object 10.

### (Operation setting unit)

The operation setting unit 43 sets the operation of the welding head 20 to form the core portion 11 on the basis of the core region and sets the operation of the welding head 20 to form the shell portion 12 on the basis of the shell region.

### (Core portion forming control unit)

The core portion forming control unit 44 controls the welding head 20 to additively form the core portion 11 by stacking the first weld beads 3a.

### (Shell portion forming control unit)

The shell portion forming control unit 45 controls the welding head 20 to additively form the shell portion 12 on the surface of the core portion 11 by stacking the second weld beads 3b.

### (Procedure of additive manufactured object Production method)

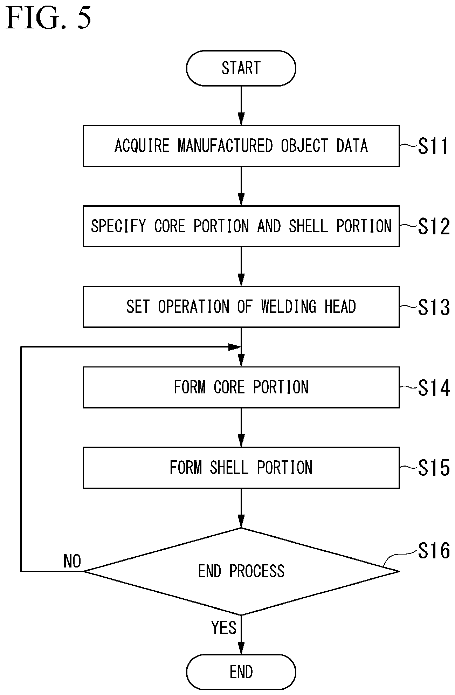

Hereinafter, the procedure of the method for producing the additive manufactured object 10 using the additive manufactured object production system 1 will be described with reference to the flowchart shown in FIG. 5. The method for producing the additive manufactured object 10 includes a manufactured object data acquiring step S11, a region specifying step S12, an operation setting step S13, a core portion forming step S14, and a shell portion forming step S15.

In the manufactured object data acquiring step S11, the manufactured object data acquiring unit 41 acquires the manufactured object data of the additive manufactured object 10.

The region specifying step S12 is performed after the manufactured object data acquiring step S11. In the region specifying step S12, the region specifying unit 42 specifies the core region and the shell region on the basis of the manufactured object data.

Here, as shown in FIG. 1, the additive manufactured object 10 can be distinguished into the core portion 11 which is the inner portion of the additive manufactured object 10 and the shell portion 12 which is the outer portion of the additive manufactured object 10. In the region specifying step S12, an outer portion having a predetermined thickness and including the surface of the additive manufactured object 10 in the manufactured object data is specified as the shell region and an inner portion in relation to the shell region is specified as the core region.

The operation setting step S13 is performed after the region specifying step S12. In the operation setting step S13, the operation setting unit 43 sets the operation of the welding head 20 to form the core portion 11 on the basis of the core region and sets the operation of the welding head 20 to form the shell portion 12 on the basis of the shell region.

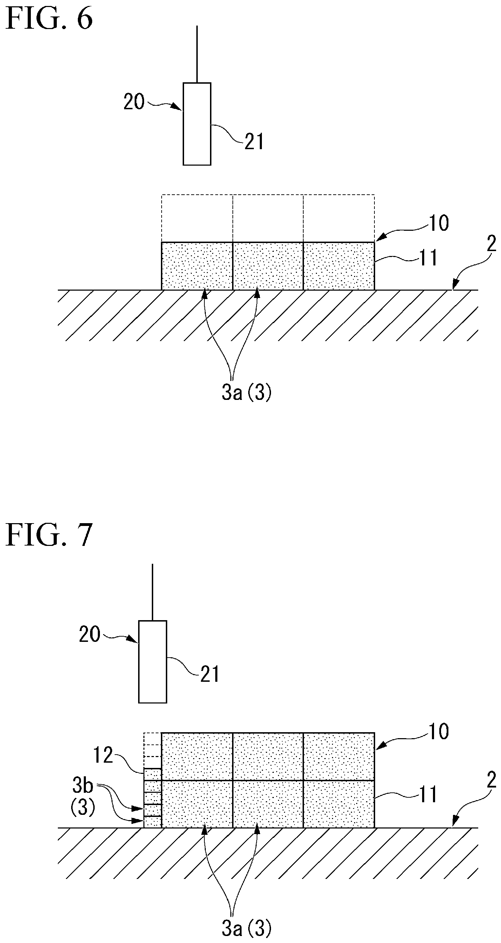

The core portion forming step S14 is performed after the operation setting step S13. As shown in FIG. 6, in the core portion forming step S14, the core portion 11 is additively formed by stacking the plurality of the first weld beads 3a. FIG. 6 schematically shows a cross-section of the formed core portion 11. In the core portion forming step S14, the core portion forming control unit 44 additively forms the core portion 11 in the core region by controlling the welding head 20 on the basis of the setting of the operation setting unit 43.

The head body 21 of the welding head 20 is disposed at a position separated from the core region on the surface of the stage 2 by a predetermined distance in the normal direction. The head body 21 moves in the plane direction of the surface of the stage 2 while keeping the separation distance from the surface of the stage 2. More specifically, the head body 21 moves in a direction perpendicular to the direction of the reciprocating motion while repeating the linear reciprocating motion along the plane direction. The welding head 20 repeatedly stops the head body 21 and forms the first weld bead 3a. In this way, the plurality of first weld beads 3a are formed continuously in the core region on the surface of the stage 2. All of the first weld beads 3a formed as described above have substantially the same resolution. A first layer of the core portion 11 is formed by integrating the plurality of first weld beads 3a.

When the first layer is formed, the process will move on to the forming of the second layer. In the forming of the second layer, the head body 21 is separated from the surface of the stage 2 in the normal direction by the height of one layer. Then, the welding head 20 is operated in the same manner as when forming the first layer to form the second layer on the first layer. The third and subsequent layers are formed in the same manner as the second layer.

In this way, a plurality of layers of the core portion 11 are formed in one core portion forming step S14.

The shell portion forming step S15 is performed after the core portion forming step S14. As shown in FIG. 7, in the shell portion forming step S15, the shell portion 12 is additively formed on the surface of the core portion 11 formed by the immediately preceding core portion forming step S14 by stacking the plurality of the second weld beads 3b. FIG. 7 schematically shows a cross-section of the core portion 11 and the shell portion 12 formed as described above. In the shell portion forming step S15, the shell portion forming control unit 45 additively forms the shell portion 12 in the shell region by controlling the welding head 20 on the basis of the setting of the operation setting unit 43.

In the shell portion forming step S15, the shell portion 12 is formed by the same height as the core portion 11 formed by the immediately preceding core portion forming step S14. The head body 21 of the welding head 20 moves in the plane direction while repeating the linear reciprocating motion similar to the core portion forming step S14. The welding head 20 repeatedly stops the head body 21 and forms the second weld bead 3b. In this way, the plurality of second weld beads 3b are formed continuously along the surface of the core portion 11 when viewed from the normal direction. All of the second weld beads 3b formed as described above have substantially the same resolution. The first layer of the shell portion 12 is formed by integrating the plurality of second weld beads 3b. It is preferable that each layer of the shell portion 12 is formed only on the forward movement path during the reciprocating motion of the head body 21. Furthermore, the shell portion 12 may be formed to cover the surface located on the side opposite to the stage 2 in the surface of the shell portion 12 if necessary.

When the first layer is formed, the process will move on to the forming of the second layer. In the forming of the second layer, the head body 21 is separated from the surface of the stage 2 in the normal direction by the height of one layer. Then, the welding head 20 is operated in the same manner as when forming the first layer to form the second layer on the first layer. The third and subsequent layers are formed in the same manner as the second layer. The shell portion 12 is formed until the shell portion reaches the same height as the core portion 11 formed in the immediately preceding core portion forming step S14.

The core portion forming step S14 and the shell portion forming step S15 may be performed by laser welding using powder P as the molten filler material or by arc welding using the wire W as the molten filler material.

After the shell portion forming step S15, a determination of the end of the process is made. In the determination of the end of the process, the additive forming control device 40 determines whether the producing of the additive manufactured object 10 ends on the basis of the manufactured object data (step S16). When the additive forming control device 40 determines that the producing of the additive manufactured object 10 does not end (step S16; NO), the process proceeds to the core portion forming step S14.

When the additive forming control device 40 determines that the producing of the additive manufactured object 10 ends (step S16; YES), the operation of the welding head 20 is ended. Then, finishing processing is performed on the surface of the additive manufactured object 10. Examples of the finishing processing include cutting, polishing, and the like. The finishing processing improves the surface accuracy of the additive manufactured object 10. Furthermore, the finishing processing can be omitted as appropriate.

In this way, the producing of the additive manufactured object 10 is completed.

### (Operation and effect)

According to the additive manufactured object production system 1 and the method of producing the additive manufactured object 10 described above, the core portion 11 is formed by stacking the plurality of the first weld beads 3a having a relatively low resolution and the shell portion 12 is additively formed by stacking the plurality of the second weld beads having a relatively high resolution.

Accordingly, it is possible to improve the accuracy of the surface of the additive manufactured object 10 immediately after the additive production compared to a case in which the core portion 11 and the shell portion 12 are formed only by stacking the first weld beads 3a. Thus, it is possible to reduce the amount of finishing processing and to shorten the time required for finishing processing.

Further, it is possible to shorten the time required for producing the entire additive manufactured object 10 compared to a case in which the core portion 11 and the shell portion 12 are formed by stacking the second weld beads 3b. Thus, it is possible to efficiently produce the additive manufactured object 10.

Further, since the shell portion forming step S15 is performed after the core portion forming step S14, it is possible to form the shell portion 12 while supporting the shell portion 12 by the core portion 11. Accordingly, it is possible to suppress the shell portion 12 from being tilted while forming the shell portion 12. Thus, it is possible to improve the accuracy of the shell portion 12.

Further, since the shell portion forming step S15 is performed after the core portion forming step S14, each layer of the shell portion 12 can be formed only by the forward movement path during the reciprocating motion of the head body 21. In this case, since only one molten pool is generated in the shell portion forming step S15, it is possible to suppress an increase in the number of bead lap locations of the second weld bead 3b. Accordingly, it is possible to suppress the occurrence of poor fusion in the shell portion 12. Thus, it is possible to suppress the occurrence of defects in the shell portion 12.

Further, since it is possible to form the core portion 11 in a prespecified core region, it is possible to improve the accuracy of the core portion 11. Similarly, since it is possible to form the shell portion 12 in a prespecified shell region, it is possible to improve the accuracy of the shell portion 12.

Here, the spot shape of the laser beam L for laser welding is easy to adjust. Therefore, when laser welding is used, the resolution of the weld bead 3 can easily be adjusted by adjusting the spot shape of the laser beam L. By increasing the resolution of the weld bead 3, it is possible to improve the accuracy of the additive manufactured object 10.

Further, even when using electron beam welding, the same effects as when using laser welding can be achieved.

However, laser welding has an advantage over electron beam welding in that it does not require a vacuum condition and can be made smaller. On the other hand, since electron beam welding is performed in a vacuum condition compared to laser welding, it has advantages in that defects can be reduced when the molten filler material is metal that is easily oxidized and that the energy efficiency can be made close to 100% because the electron beam is not reflected.

Further, since the weld bead 3 can be formed at a high speed when using the arc welding, it is possible to shorten the time required for producing the additive manufactured object 10. Further, since the wire W is relatively inexpensive as the molten filler material, production costs can be reduced.

### <Modified example of first embodiment>

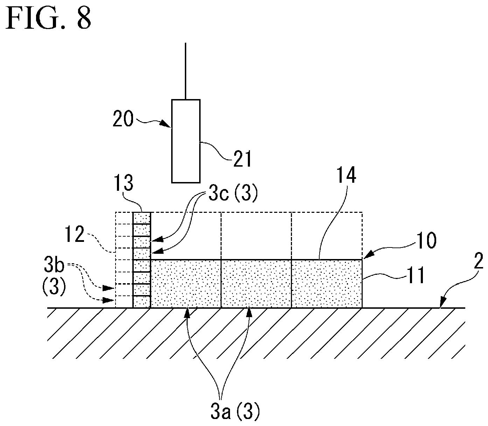

Here, as a modified example of the first embodiment, for example, a configuration shown in FIG. 8 may be adopted. This modified example is different from the first embodiment in the welding head 20 and the core portion forming control unit 44 of the additive manufactured object production system 1 and the core portion forming step S 14 in the method of producing the additive manufactured object 10.

### (Welding head)

As shown in FIG. 8, the welding head 20 forms three types of weld beads 3, that is, a third weld bead 3c whose size is corresponding to a third resolution higher than the first resolution and lower than the second resolution in addition to the first weld bead 3a and the second weld bead 3b. The third weld bead 3c is formed by the same molten filler material as the first weld bead 3a and the second weld bead 3b.

Furthermore, the third resolution may be higher than the first resolution or may be the same as the second resolution or higher than the second resolution.

### (Core portion forming control unit)

The core portion forming control unit 44 controls the welding head 20 so that a surface portion 13 including the surface of the core portion 11 is additively formed by stacking the plurality of the third weld beads 3c. The surface portion 13 constitutes the side surface of the core portion 11 rising from the surface of the stage 2.

Furthermore, the core portion forming control unit 44 controls the welding head 20 so that the inner portion (hereinafter, referred to as an inner core 14) in relation to the surface portion 13 in the core portion 11 is additively formed after the surface portion 13 is additively formed.

### (Procedure of additive manufactured object Production method)

The method of producing the additive manufactured object 10 is performed by the same procedure as that of the above-described first embodiment. First, the manufactured object data acquiring step S11 is performed. The region specifying step S12 is performed after the manufactured object data acquiring step S11. The operation setting step S13 is performed after the region specifying step S12. The core portion forming step S14 is performed after the operation setting step S13. The shell portion forming step S15 is performed after the core portion forming step S14. A determination of the end of the process is made after the shell portion forming step S15 (step S16). Hereinafter, the core portion forming step S14 different from that of the first embodiment will be described.

### (Core portion forming step)

The core portion forming step S14 includes the outer part forming step and the inner part forming step.

The outer part forming step is performed after the operation setting step S13. In the outer part forming step, the surface portion 13 in the core portion 11 is additively formed by stacking the plurality of the third weld beads 3c.

The inner part forming step is performed after the outer part forming step. In the inner part forming step, the inner core 14 in the core portion 11 is additively formed by stacking the plurality of the first weld beads 3a.

### (Operation and effect)

According to this modified example, it is possible to improve the accuracy of the surface of the core portion 11 compared to a case in which the core portion 11 is formed only by stacking the first weld beads 3a. Accordingly, since it is possible to form the shell portion 12 on the surface of the core portion 11 with high accuracy, it is possible to further improve the accuracy of the surface of the additive manufactured object 10. Further, it is possible to shorten the time required for forming the entire core portion 11 compared to a case in which the core portion 11 is formed only by stacking the third weld beads 3c. Thus, it is possible to further efficiently produce the additive manufactured object 10.

Further, it is possible to form the inner core 14 of the core portion 11 after forming the surface portion 13 of the core portion 11. Accordingly, it is possible to suppress the occurrence of sag due to its own weight on the side surface of the inner core 14 which is likely to be heavier than the surface portion 13. That is, it is possible to suppress the surface of the core portion 11 from sagging due to its own weight and improve the surface accuracy of the core portion 11.

### <Second embodiment>

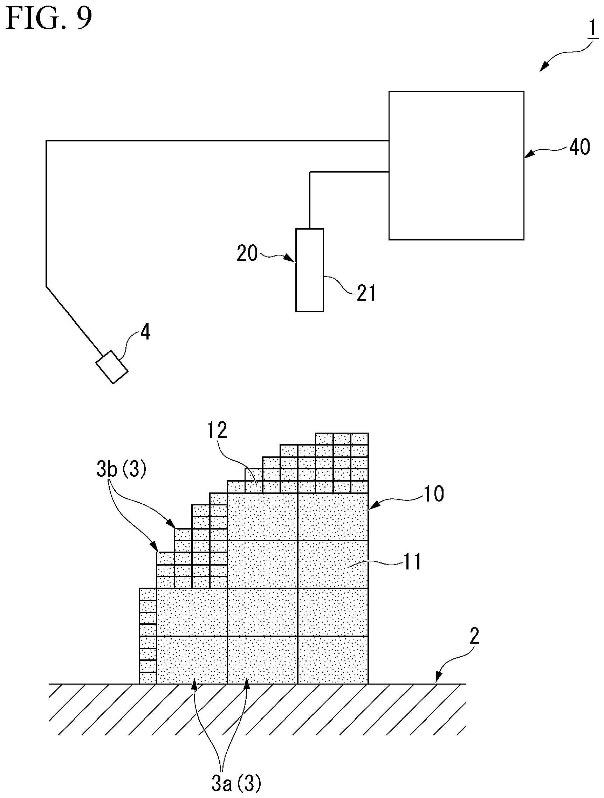

Hereinafter, the additive manufactured object production system 1 and the method of producing the additive manufactured object 10 according to a second embodiment of the present disclosure will be described with reference to FIGS. 9 to 13. In the second embodiment, the same reference numerals are given to the same components as in the first embodiment, and detailed descriptions are omitted as appropriate. The additive manufactured object production system 1 of the second embodiment further includes a condition detection unit 4 and the additive forming control device 40 does not include the region specifying unit 42 of the first embodiment, but further includes an accuracy determination unit 46. The method of producing the additive manufactured object 10 of the second embodiment further includes an accuracy determining step S24 of determining the accuracy of the surface of the core portion 11 between the core portion forming step S23 and the shell portion forming step S26.

### (Additive manufactured object production system)

As shown in FIG. 9, the additive manufactured object production system 1 includes the stage 2, the welding head 20, the additive forming control device 40, and the condition detection unit 4.

### (Condition detection unit)

The condition detection unit 4 detects the surface condition of the core portion 11. Examples of the surface condition of the core portion 11 include surface roughness of the surface of the core portion 11 and the like. Examples of the condition detection unit 4 include a sensor, a camera, and the like.

### (Additive forming control device)

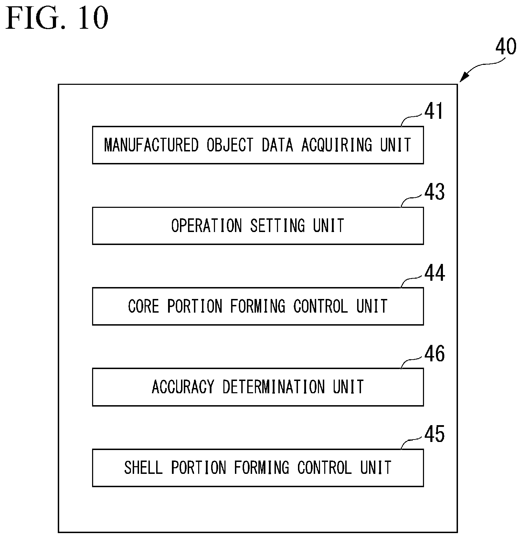

Subsequently, the configuration of the additive forming control device 40 of this embodiment will be described with reference to FIG. 10.

As shown in FIG. 10, the additive forming control device 40 includes the manufactured object data acquiring unit 41, the operation setting unit 43, the core portion forming control unit 44, the accuracy determination unit 46, and the shell portion forming control unit 45.

### (Manufactured object data acquiring unit)

The manufactured object data acquiring unit 41 acquires the manufactured object data of the additive manufactured object 10. The manufactured object data includes data of the final shape of the additive manufactured object 10.

### (Operation setting unit)

The operation setting unit 43 sets the operation of the welding head 20 so that the core portion 11 corresponding to the final shape of the additive manufactured object 10 is manufactured on the basis of the manufactured object data. The operation setting unit 43 sets the operation of the welding head 20 so that the shell portion 12 is formed on the basis of the surface condition of the core portion 11.

### (Accuracy determination unit)

The accuracy determination unit 46 determines the accuracy of the surface of the core portion 11 on the basis of the detection result of the condition detection unit 4.

### (Shell portion forming control unit)

The shell portion forming control unit 45 controls the welding head 20 so that the shell portion 12 is additively formed only when the accuracy is determined to be inappropriate by the accuracy determination unit 46.

### (Procedure of additive manufactured object production method)

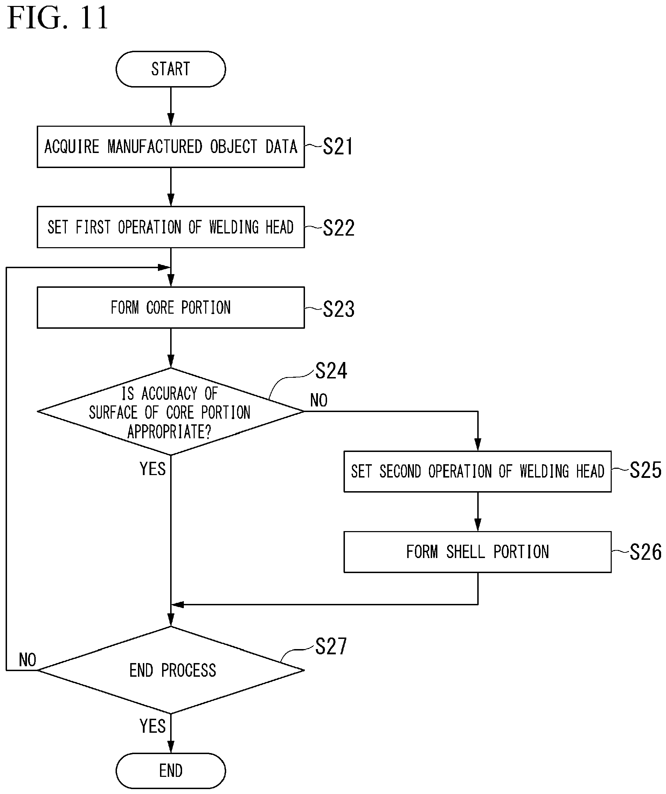

Hereinafter, a procedure of a method of producing the additive manufactured object 10 using the additive manufactured object production system 1 will be described with reference to the flowchart shown in FIG. 11. The method of producing the additive manufactured object 10 includes a manufactured object data acquiring step S21, operation setting steps S22 and S25, a core portion forming step S23, an accuracy determining step S24, and a shell portion forming step S26.

First, the manufactured object data acquiring step S21 is performed. The first operation setting step S22 is performed after the manufactured object data acquiring step S21.

In the first operation setting step S22, the operation of the welding head 20 is set so that the operation setting unit 43 forms the core portion 11 on the basis of the manufactured object data.

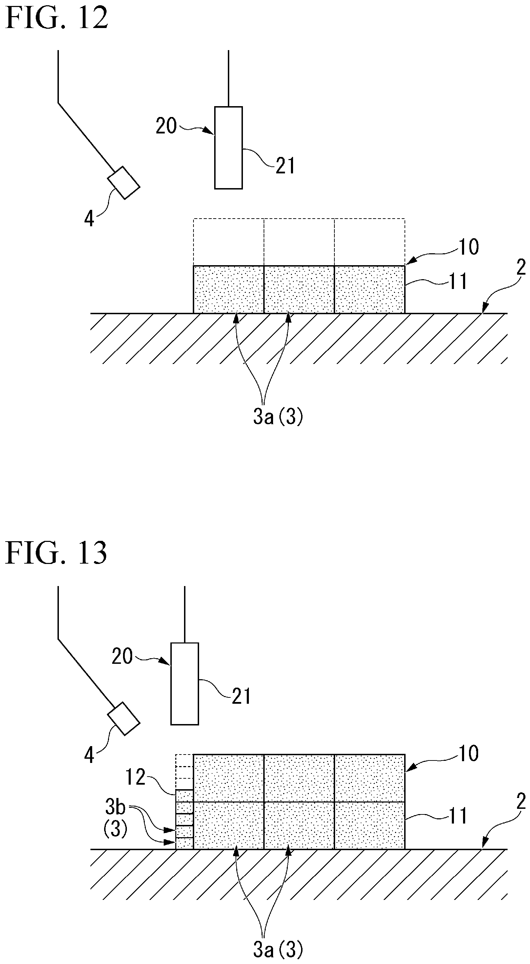

The core portion forming step S23 is performed after the first operation setting step S22. As shown in FIG. 12, in the core portion forming step S23, the core portion 11 corresponding to the final shape of the manufactured object is additively formed by stacking the plurality of the first weld beads 3a. FIG. 12 schematically shows a cross-section of the formed core portion 11. In the core portion forming step S23, the core portion forming control unit 44 additively forms the core portion 11 by controlling the welding head 20 on the basis of the setting of the operation setting unit 43.

The accuracy determining step S24 is performed after the core portion forming step S23. In the accuracy determining step S24, first, the condition detection unit 4 detects the surface condition of the core portion 11 formed in the immediately preceding core portion forming step S23. Subsequently, the accuracy determination unit 46 determines the accuracy of the surface of the core portion 11. Only when the accuracy determination unit 46 determines that the accuracy of the surface of the core portion 11 is inappropriate (the accuracy determining step S24; NO), the process proceeds to the second operation setting step S25. When the accuracy determination unit 46 determines that the accuracy of the surface of the core portion 11 is appropriate (the accuracy determining step S24; YES), a determination of the end of the process is made.

In the second operation setting step S25, the operation setting unit 43 sets the operation of the welding head 20 so that the shell portion 12 is formed on the basis of the surface condition of the core portion 11.

The shell portion forming step S26 is performed after the second operation setting step S25. As shown in FIG. 13, in the shell portion forming step S26, the shell portion 12 is additively formed on the surface of the core portion 11 formed in the immediately preceding core portion forming step S23 by stacking the plurality of the second weld beads 3b. FIG. 13 schematically shows a cross-section of the core portion 11 and the shell portion 12 formed as described above. In the shell portion forming step S26, the shell portion forming control unit 45 additively forms the shell portion 12 by controlling the welding head 20 on the basis of the setting of the operation setting unit 43. The shell portion 12 may be formed from the middle of the side surface of the core portion 11.

When the accuracy determination unit 46 determines that the accuracy of the surface of the core portion 11 is appropriate, a determination of the end of the process is made after the shell portion forming step S26. In the determination of the end of the process, the additive forming control device 40 determines whether the producing of the additive manufactured object 10 ends on the basis of the manufactured object data (step S27). When the additive forming control device 40 determines that the producing of the additive manufactured object 10 does not end (step S27; NO), the process proceeds to the core portion forming step S23.

When the additive forming control device 40 determines that the producing of the additive manufactured object 10 ends (step S27; YES), the operation of the welding head 20 ends. Then, finishing processing is performed on the surface of the additive manufactured object 10.

In this way, the producing of the additive manufactured object 10 is completed.

Furthermore, the entire core portion 11 may be formed in one core portion forming step S23. Further, the shell portion forming step S26 may not be performed even once until the producing of the additive manufactured object 10 is completed.

### (Operation and effect)

According to this embodiment, when the accuracy of the surface condition of the core portion 11 is appropriate, the forming of the shell portion 12 can be omitted. Accordingly, it is possible to shorten the time required for producing the additive manufactured object 10 and to reduce production costs. Thus, it is possible to efficiently produce the additive manufactured object 10.

Further, it is possible to f the shell portion 12 if necessary after forming the entire core portion 11 by one core portion forming step. Accordingly, it is possible to produce the additive manufactured object 10 without moving the additive manufactured object 10 during producing more than necessary. That is, it is possible to minimize the handling of the additive manufactured object 10. This effect is particularly suitable when the additive manufactured object 10 is a large structure.

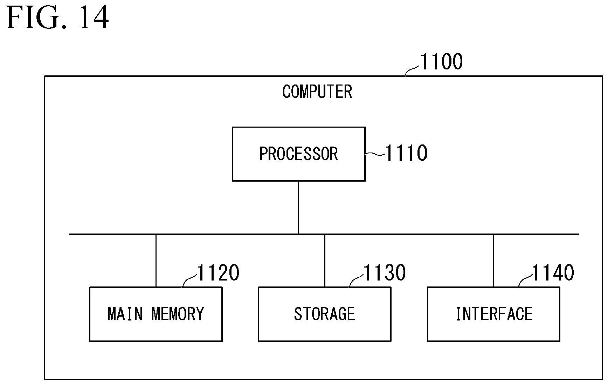

Furthermore, FIG. 14 is a hardware configuration diagram showing a configuration of a computer 1100 according to this embodiment.

The computer 1100 includes a processor 1110, a main memory 1120, a storage 1130, and an interface 1140.

The above-described additive forming control device 40 is installed in the computer 1100. Then, the operations of each processing unit described above are stored in the storage 1130 in the form of a program. The processor 1110 reads the program from the storage 1130, expands the program to the main memory 1120, and executes the process according to the program. Further, the processor 1110 secures a storage area in the main memory 1120 according to the program.

The program may be for realizing some of the functions to be performed by the computer 1100. For example, the program may function in combination with other programs already stored in the storage 1130 or in combination with other programs installed in other devices. Further, the computer 1100 may include a custom large scale integrated circuit (LSI) such as a programmable logic device (PLD) in addition to or in place of the above configuration. Examples of PLDs include programmable array logic (PAL), generic array logic (GAL), complex programmable logic device (CPLD), and field programmable gate array (FPGA). In this case, a part or all of the functions implemented by the processor 1110 may be implemented by the integrated circuit.

Examples of the storage 1130 include magnetic disks, magneto-optical disks, semiconductor memories, and the like. The storage 1130 may be an internal medium connected directly to the bus of computer 1100 or may be an external medium connected to the computer 1100 via the interface 1140 or a communication line. Further, when this program is distributed to the computer 1100 via a communication line, the computer 1100 that received the program may develop the program in the main memory 1120 and execute the above processing.

Further, the program may be for realizing some of the functions described above. Furthermore, the program may be a so-called difference file (difference program) that implements the above-described functions in combination with other programs already stored in the storage 1130.

### (Other embodiments)

Although the embodiments of the present disclosure have been described above in detail with reference to the drawings, the specific configuration is not limited to these embodiments and the present disclosure includes design changes within the scope of the gist of the present disclosure.

Furthermore, in the above-described embodiments, although it has been described that the molten filler material is a metal material, the present disclosure is not limited thereto and the molten filler material may be a resin material.

Furthermore, in the above-described embodiments, although it has been described that the first weld bead 3a and the second weld bead 3b are formed of the same molten filler material, the present disclosure is not limited thereto and these weld beads may be formed of different molten filler materials.

Furthermore, in the above-described embodiments, although it has been described that the molten filler material is the powder P when the welding head 20 is the laser welding head 20a, the present disclosure is not limited thereto and, for example, the molten filler material may be the wire W. Further, although it has been described that the molten filler material is the wire W when the welding head 20 is the arc welding head 20b, the present disclosure is not limited thereto and, for example, the molten filler material may be the powder P.

Furthermore, a case in which the core portion forming step S14 includes the outer part forming step and the inner part forming step has been described as a modified example of the first embodiment, but this modified example may be applied even in the second embodiment. That is, the core portion forming step S23 may include the outer part forming step and the inner part forming step.

Furthermore, in the above-described embodiments, although it has been described that only the welding head 20 is operated when forming the core portion 11 and the shell portion 12, the present disclosure is not limited thereto and, for example, the stage 2 may be operated or both the welding head 20 and the stage 2 may be operated.

Furthermore, in the above-described embodiments, although it has been described that the shell portion 12 is additively formed after a part of the core portion 11 is additively formed, the present disclosure is not limited thereto and, for example, the shell portion 12 may be additively formed after the entire core portion 11 is additively formed.

Furthermore, in the core portion forming steps S14 and S23 of the above-described embodiments, although it has been described that all of first weld beads 3a formed as described above have substantially the same resolution, the present disclosure is not limited thereto. The first resolution of the first weld bead 3a may be lower than the second resolution of the second weld bead 3b. For example, the core portion 11 may be divided into a plurality of regions and the resolution of the first weld bead 3a may be changed for each region.

Furthermore, in the above-described embodiments, although it has been described that a plurality of layers of the core portion 11 are formed by one core portion forming step S14 or S23, the present disclosure is not limited thereto and the core portion 11 may be further formed by one core portion forming step S14 or S23.

Furthermore, in the shell portion forming steps S 15 and S26 of the above-described embodiments, although it has been described that all of second weld beads 3b formed as described above have substantially the same resolution, the present disclosure is not limited thereto. The second resolution of the second weld bead 3b may be higher than the first resolution of the first weld bead 3a. For example, the shell portion 12 may be divided into a plurality of regions and the resolution of the second weld bead 3b may be changed for each region.

Furthermore, in the core portion forming steps S14 and S23 and the shell portion forming steps S 15 and S26 of the above-described embodiments, weaving welding may be performed. Although the detailed mechanism will be omitted, weaving welding may be performed by swinging both the heat source and the molten filler material or by swinging only the heat source or only the molten filler material. When swinging both the heat source and the molten filler material, the mechanism of the welding head 20 can be simplified. When swinging only the heat source, the producing safety can be improved. When swinging only the molten filler material, heat input controllability can be improved.

### <Appendix>

The method of producing the additive manufactured object 10 and the additive manufactured object production system 1 described in each embodiment are understood, for example, as below.

(1) The method of producing the additive manufactured object 10 according to a first aspect includes: the core portion forming steps S14 and S23 of additively forming the core portion 11 as the inner portion of the additive manufactured object 10 by stacking the first weld beads 3a each size of which is corresponding to a first resolution; and the shell portion forming steps S15 and S26 of additively forming the shell portion 12 as the outer portion of the additive manufactured object 10 on the surface of the core portion 11 by stacking the second weld beads 3b each size of which is corresponding to a second resolution higher than the first resolution after the core portion forming steps S14 and S23.

Accordingly, it is possible to improve the accuracy of the surface of the additive manufactured object 10 immediately after the additive production compared to a case in which the core portion 11 and the shell portion 12 are formed only by stacking the first weld beads 3a. Further, it is possible to shorten the time required for producing the entire additive manufactured object 10 compared to a case in which the core portion 11 and the shell portion 12 are formed only by stacking the second weld beads 3b. Thus, it is possible to efficiently produce the additive manufactured object 10.

(2) The method of producing the additive manufactured object 10 of a second aspect is the method of producing the additive manufactured object 10 of the first aspect, wherein each of the core portion forming steps S14 and S23 may include: the outer part forming step of forming the outer part 13 of the core portion 11, which has the surface of the core portion 11, by stacking the third weld beads 3c each size of which is corresponding to a third resolution higher than the first resolution; and the inner part forming step of additively forming the inner part (i.e., the inner core 14) of the core portion 11 inside the outer part 13 by stacking the first weld beads 3a each size of which is corresponding to the first resolution after the outer part forming step.

Accordingly, it is possible to improve the accuracy of the surface of the core portion 11 compared to a case in which the core portion 11 is formed only by stacking the first weld beads 3a. Further, it is possible to shorten the time required for forming the entire core portion 11 compared to a case in which the core portion 11 is formed only by stacking the third weld beads 3c.

(3) The method of producing the additive manufactured object 10 of a third aspect is the method of producing the additive manufactured object 10 of the first or second aspect, further including: the region specifying step S12 of specifying the core region in which the core portion 11 is to be formed and the shell region in which the shell portion 12 is to be formed with aiming at the final shape of the additive manufactured object 10 before the core portion forming step S 14, wherein in the core portion forming step S14, the core portion 11 may be additively formed in the core region specified by the region specifying step S12 and in the shell portion forming step S 15, the shell portion 12 may be additively formed in the shell region specified by the region specifying step S12.

Accordingly, it is possible to shorten the time required for producing the entire additive manufactured object 10 while keeping high accuracy by forming the core portion 11 in a pre-specified core region and forming the shell portion 12 in a pre-specified shell region.

(4) The method of producing the additive manufactured object 10 of a fourth aspect is the method of producing the additive manufactured object 10 of the first or second aspect, further including: the accuracy determining step S24 of determining the accuracy of the surface of the core portion 11 at the time between the core portion forming step S23 and the shell portion forming step S26, wherein the shell portion forming step S26 may be performed only when the accuracy is determined to be inappropriate in the accuracy determining step S24.

Accordingly, when the accuracy of the surface condition of the core portion 11 is appropriate, the forming of the shell portion 12 can be omitted. Accordingly, it is possible to further shorten the time required for producing the additive manufactured object 10.

(5) The method of producing the additive manufactured object 10 of a fifth aspect is the method of producing the additive manufactured object 10 of any one of the first to fourth aspects, wherein the core portion forming steps S14 and S23 and the shell portion forming steps S15 and S26 may be performed by laser welding or electron beam welding.

By adjusting the spot shape of the laser beam L or the electron beam, it is possible to easily adjust the resolution of the weld beads 3. By increasing the resolution of the weld beads 3, it is possible to improve the accuracy of the additive manufactured object 10.

(6) The method of producing the additive manufactured object 10 of a sixth aspect is the method of producing the additive manufactured object 10 of any one of the first to fourth aspects, wherein the core portion forming steps S14 and S23 and the shell portion forming steps S15 and S26 may be performed by arc welding.

Accordingly, since it is possible to form the weld beads 3 at a high speed, it is possible to shorten the time required for producing the additive manufactured object 10.

(7) The additive manufactured object production system 1 of a seventh aspect includes: the welding head 20; and the additive forming control device 40 which is configured to control the welding head 20 so that the additive manufactured object 10 is formed by operating the welding head 20, wherein the additive forming control device 40 includes: the core portion forming control unit 44 which is configured to control the welding head 20 so that the core portion 11 as the inner portion of the additive manufactured object 10 is additively formed by stacking the first weld beads 3a each size of which is corresponding to the first resolution; and the shell portion forming control unit 45 which is configured to control the welding head 20 so that the shell portion 12 as the outer portion of the additive manufactured object 10 is additively formed on the surface of the core portion 11 by stacking the second weld beads 3b each size of which is corresponding to the second resolution higher than the first resolution after at least part of the core portion 11 is additively formed.

(8) The additive manufactured object production system 1 of an eighth aspect is the additive manufactured object production system 1 of the seventh aspect, wherein the core portion forming control unit 44 may control the welding head 20 so that the outer part of the core portion 11, which has the surface of the core portion 11, is additively formed by stacking the third weld beads 3c each size of which is corresponding to the third resolution higher than the first resolution, and control the welding head 20 so that the inner part (i.e., the inner core 14) of the core portion 11 is additively formed inside the outer part 13 by stacking the first weld beads 3a each size of which is corresponding to the first resolution after the surface portion 13 is additively formed.

(9) The additive manufactured object production system 1 of a ninth aspect is the additive manufactured object production system 1 of the seventh or eighth aspect, wherein the additive forming control device 40 may further include the region specifying unit 42 which is configured to specify the core region in which the core portion 11 is to be formed and the shell region in which the shell portion 12 is to be formed with aiming at the final shape of the additive manufactured object 10, wherein the core portion forming control unit 44 may control the welding head 20 so that the core portion 11 is additively formed in the core region specified by the region specifying unit 42, and wherein the shell portion forming control unit 45 may control the welding head 20 so that the shell portion 12 is additively formed in the shell region specified by the region specifying unit 42.

(10) The additive manufactured object production system 1 of a tenth aspect is the additive manufactured object production system 1 of the seventh or eighth aspect, further including: the condition detection unit 4 which is configured to detect the surface condition of the core portion 11, wherein the additive forming control device 40 may further include the accuracy determination unit 46 which is configured to determine the accuracy of the surface of the core portion 11 on the basis of the detection result of the condition detection unit 4, and wherein the shell portion forming control unit 45 may control the welding head 20 so that the shell portion 12 is additively formed only when the accuracy is determined to be inappropriate in the accuracy determination unit 46.

(11) The additive manufactured object production system 1 of an eleventh aspect is the additive manufactured object production system 1 of any one of the seventh to tenth aspects, wherein the welding head 20 may be the laser welding head 20a performing the additive formation with laser welding or the electron beam forming head performing the additive formation with electron beam welding.

(12) The additive manufactured object production system 1 of a twelfth aspect is the additive manufactured object production system 1 of any one of the seventh to tenth aspects, wherein the welding head 20 may be the arc welding head 20b performing the additive formation with arc welding.

### Industrial Applicability

According to the additive manufactured object production method and the additive manufactured object production system of the present disclosure, it is possible to efficiently produce the additive manufactured object.

### Reference Signs List

1 Additive manufactured object production system
2 Stage
3 Weld bead
3a First weld bead
3b Second weld bead
3c Third weld bead
4 Condition detection unit
10 Additive manufactured object
11 Core portion
12 Shell portion
13 Outer-skin portion
14 Inner core
20 Welding head
20a Laser welding head
20b Arc welding head
21 Head body
22 Laser source
23 Laser passage
24 Powder supply path
26 Electrode
27 Wire insertion passage
40 Additive forming control device
41 Manufactured object data acquiring unit
42 Region specifying unit
43 Operation setting unit
44 Core portion forming control unit
45 Shell portion forming control unit
46 Accuracy determination unit
1110 Processor
1120 Main memory
1130 Storage
1140 Interface
A Arc
L Laser beam
P Powder
S11, S21 Manufactured object data acquiring step
S12 Region specifying step
S13, S22, S25 Operation setting step
S14, S23 Core portion forming step
S15, S26 Shell portion forming step
S24 Accuracy determining step
W Wire

## Claims

1. A production method for additive manufactured object, the method comprising:
a core portion forming step of additively forming a core portion as an inner portion of an additive manufactured object by stacking first weld beads each size of which is corresponding to a first resolution; and
a shell portion forming step of additively forming a shell portion as an outer portion of the additive manufactured object on a surface of the core portion by stacking second weld beads each size of which is corresponding to a second resolution higher than the first resolution after the core portion forming step.

2. The production method according to claim 1,
wherein the core portion forming step includes:
an outer part forming step of forming an outer part of the core portion, which has the surface of the core portion, by stacking third weld beads each corresponding to a third resolution higher than the first resolution; and
an inner part forming step of additively forming an inner part of the core portion inside the outer part by stacking the first weld beads each corresponding to the first resolution after the outer-skin forming step.

3. The production method according to claim 1 or 2, further comprising:
a region specifying step of specifying a core region in which the core portion is to be formed and a shell region in which the shell portion is to be formed with aiming at a final shape of the additive manufactured object before the core portion forming step,
wherein in the core portion forming step, the core portion is additively formed in the core region specified by the region specifying step, and
wherein in the shell portion forming step, the shell portion is additively formed in the shell region specified by the region specifying step.

4. The production method according to claim 1 or 2, further comprising:
an accuracy determining step of determining the accuracy of the surface of the core portion at a time between the core portion forming step and the shell portion forming step,
wherein the shell portion forming step is performed only when the accuracy is determined to be inappropriate in the accuracy determining step.

5. The production method according to any one of claims 1 to 4,
wherein the core portion forming step and the shell portion forming step are performed by laser welding or electron beam welding.

6. The production method according to any one of claims 1 to 4,
wherein the core portion forming step and the shell portion forming step are performed by arc welding.

7. A production system for additive manufactured object, the system comprising:
a welding head; and
an additive forming control device which is configured to control the welding head so that an additive manufactured object is formed by operating the welding head,
wherein the additive forming control device includes:
a core portion forming control unit which is configured to control the welding head so that a core portion as an inner portion of the additive manufactured object is additively formed by stacking first weld beads each size of which is corresponding to a first resolution; and
a shell portion forming control unit which is configured to control the welding head so that a shell portion as an outer portion of the additive manufactured object is additively formed on a surface of the core portion by stacking second weld beads each size of which is corresponding to a second resolution higher than the first resolution after at least part of the core portion is additively formed.

8. The production system according to claim 7,
wherein the core portion forming control unit controls the welding head so that an outer part of the core portion, which has the surface of the core portion, is additively formed by stacking third weld beads each size of which is corresponding to a third resolution higher than the first resolution, and controls the welding head so that an inner part of the core portion is additively formed inside the outer part 13 by stacking the first weld beads each size of which is corresponding to the first resolution after the outer part is additively formed.

9. The production system according to claim 7 or 8,
wherein the additive forming control device further includes a region specifying unit which is configured to specify a core region in which the core portion is to be formed and a shell region in which the shell portion is to be formed with aiming at a final shape of the additive manufactured object,
wherein the core portion forming control unit controls the welding head so that the core portion is additively formed in the core region specified by the region specifying unit, and
wherein the shell portion forming control unit controls the welding head so that the shell portion is additively formed in the shell region specified by the region specifying unit.

10. The production system according to claim 7 or 8, further comprising a condition detection unit which is configured to detect a surface condition of the core portion,
wherein the additive forming control device further includes an accuracy determination unit which is configured to determine the accuracy of the surface of the core portion on the basis of the detection result of the condition detection unit, and
wherein the shell portion forming control unit controls the welding head so that the shell portion is additively formed only when the accuracy is determined to be inappropriate in the accuracy determination unit.

11. The production system according to any one of claims 7 to 10,
wherein the welding head is a laser welding head performing an additive formation with laser welding or an electron beam forming head performing an additive formation with electron beam welding.

12. The production system according to any one of claims 7 to 10,
wherein the welding head is an arc welding head performing an additive formation with arc welding.
